# EUROPEAN PATENT APPLICATION

(11) **EP 1 640 738 A1**
(43) Date of publication of application: **29.03.2006**
(21) Application number: 04022974.2
(22) Date of filing: 27.09.2004
(51) Int. Cl.: G01S 5/02

(54) **Mobile receiver**

(71) Applicant: Fraunhofer-Gesellschaft zur Förderung der angewandten Forschung e.V., 80686 München (DE)
(72) Inventor: Bresch, Manfred, 45478 Mühlheim (DE); Mueller, Hans-Christian, 45879 Gelsenkirchen (DE); Shi, Jianliang, 47057 Duisburg (DE)
(74) Representative: Zinkler, Franz

(57) **Abstract**

A mobile receiver for estimating a position of a transmitter, the transmitter being configured for transmitting a transmitter specific signal, comprises means (101) for angular-selective sampling a reception field over time to obtain a plurality of peak time signals, a peak time signal representing a variation of a peak angle over time, wherein a peak angle corresponding to a time instant is an angle at which the reception field has a local maximum at the time instant, means (103) for comparing the plurality of peak time signals or a processed versions thereof with a plurality of predetermined reference signals, a predetermined reference signal representing a predetermined variation of a peak angle over time corresponding to a direct line-of-sight path to obtain a best match peak time signal, and means (105) for calculating the position using the best match peak time signal. According to the present invention, the position of the transmitter can be estimated even in a multi path transmission environment.

## Description

The present invention is in the field of estimating a direction of arrival of incident electro-magnetic waves in a multi-path propagation environment.

Currently, positioning systems like GPS are commercially available. These systems rely on the estimation of the time delay between signal transmission and signal reception. The signal is provided with a time-stamp. The "Clock" of the transmitter, which has to provide the time-stamp of the signal transmission must be well synchronized with the "clock" of the receiver, which uses the time delay for distance determination. This method is called "time of arrival" (TOA). Due to the light velocity of 300000km/h, the precision of this distance determination is mere roughly 100 meters. A location precision of 3 meters demands a time precision of 10ns, which so far is not achieved in positioning systems. In mobile phone systems like GSM, the signal strength is utilized for distance determination purposes. In the field object detection and location in urban areas, this method fails to the different transmission power and to the possible presence of attenuators between transmitter and receiver, since the location shall also work, when there is no line of sight.

The direction of arrival of received signals can be determined right now at reasonable precision. However, in case of a multi-path propagation, i.e. the presence of reflectors leads to arrival of the same signal from several direction, all currently available DOA estimators fail. In urban areas, for the detection and location of objects, always the possibility of multi-path propagation due to houses, cars, trees etc. has to be considered.

Radar based positioning systems also work, when there is no line of sight at good precision. However, these cannot distinguish between the located object (only a surface/shape classification is possible), since the signal source is the positioning system itself and not the object not be detected. Radar systems furthermore are not applicable, if the objected to be located does not contain metal or if occluding obstacles (e.g. parking cars) contain metal.

Mobile telecommunication systems employ a kind of beam-forming ("smart antennas"). These systems maximize the sensitivity in a certain direction and minimize the sensitivity in another certain direction, where the presence of an interferer is assumed. The tasks of these systems is not object location, but spatial division multiplexing of various telecommunication channels. For the object location, the sensitivity of the receiver in a certain direction has to be maximized in a certain direction and minimized in all other directions.

Recent researches concerning the traffic accident statistics show, that many various activities have been able to reduce the number of traffic accidents with vulnerable road-users (VRU) involved by a significant number. However, in urban areas, all methods applied so far fail to reduce traffic accidents, when there is no line of sight. Therefore, the VRU carries a transponder in order to become visible. The transponder signal is used to detect and locate the VRU in order to warn the driver of a vehicle and avoid fatal collisions. The transponder signal of the VRU has to carry a certain signature in order to be discriminated against obstacles of low importance. Without the knowledge about the located object warning the driver would be senseless. In order to avoid confusing the receiver by interfering signals, the object transponder signal has to contain a certain signature for its identification and its discrimination against other objects and other signal sources in the environment. Furthermore, the object has to be recognized (e.g. is it a VRU of something of no significance?).

The position of an object (e.g. a VRU) has to be determined precisely even when there is no line of sight. As in traffic scenes there are many reflectors (houses, trees, cars,..), echoes occur and the estimation has to work in a multi-path propagation environment.

As TOA (which is used e.g. in GPS systems) is too imprecise by far, the object location has to be carried out by means of sequential triangulation: The positioning system measures the DOA of the incident signal. The location is the origin of a measurement line in the same direction as the estimated DOA. Then the positioning system moves on to another location and again measures the DOA. This procedure can be repeated and the intersection of the measurement lines is the object position. Hence, for the location the DOA of the VRUs transponder signal has to be estimated.

Currently available systems lack precision and do not work in a multi-part propagation environment. Recent researches concerning the traffic accident statistics show, that many various activities were able to reduce the number of traffic accidents in urban areas by a significant number. However, all methods applied so far fail to reduce traffic accidents, when there is no line-of-sight. Therefore, a transponder signal is utilized to make vulnerable road-users (VRU) visible. The transponder signal is used to detect and locate a VRU in order to warn the driver and avoid fatal collisions. As for this location purpose, time-of-arrival (which is used e.g. in GPS systems) is too imprecise by far, VRU location in urban traffic areas is carried out by means of sequential triangulation. Hence, the direction-of-arrival is estimated.

It is the object of the present invention to provide a concept for estimating a position of an object in a multi-path environment. This object is achieved by a mobile receiver according to claim 1 or by a method according to claim 13 or by a computer program according to claim 14.

The present invention provides a mobile receiver being configured for estimating a position of a transmitter, being e.g. comprised the object, the transmitter being configured for transmitting a transmitter-specific signal, wherein the mobile receiver comprises means for angular-selective sampling a reception field over time to obtain a plurality of peak time signals, a peak time signal representing a variation of a peak angle over time, wherein a peak angle corresponding to a time instant is an angle at which the reception field has a local maximum at the time instant.

The mobile receiver further comprises means for comparing the plurality of peak time signals or processed versions thereof with a plurality of predetermined reference signals, a predetermined reference signal representing a predetermined variation of a peak angle over time corresponding to direct line-of-sight path to obtain a best match time signal, and means for calculating the position using the best match peak signal, the best match peak signal representing e.g. a direct path component.

In accordance with the present invention, the mobile receiver is configured for scanning the reception field subsequently, for example every 1µs, within a predetermined time interval, e.g. 1ms or 3ms. The detected field components for different reception angles, i.e. for different directions of arrival, are than analysed in order to find a maximum component associated with the peak angle. Since this maximum is associated with a certain time instant and not with the scanning interval, it is termed "local maximum".

The present invention is based on the finding that the direct path can be discriminated against echoes by means of pattern recognition, because an angle of an incident reflected wave moves in an other direction than an angle of the directly propagated signal as the positioning system moves. This discrimination may be regarded as being a kind of multi-path cancelling. The typical pattern of a direct path may be stored in a data base of the mobile receiver which may contain a signal processor and a memory. The stored typical pattern of a directly propagated wave may be compared with patterns of the incident signals.

The pattern recognition is carried out by the means of feature extraction. For example, a matched filter can be applied to the extracted values corresponding to processed versions of the peak time signals for classification. For example for the classification purposes phase-only filters can be used which have proved to be more robust.

In order to cope with echoes, the mobile receiver distinguishes between direct propagation and reflected waves descending from the object's transponder. To achieve this, a time sequence of the angle of arrival may be used to analyse the pattern of movement of the direction of the incident wave as the positioning system moves from location to location in order to perform the positioning by the means of e. g. triangulation.

It is an advantage of the inventive concept that a location of an object can precisely be estimated even in a multi path propagation environment, for example at a location precision of three meters. Moreover the inventive system is able to determine distances when there are attenuators between and receiver. In addition the inventive system is able of locating and specifying objects when the objects are not visible, e.g. as a result of darkness or fog, or when the objects are hidden. Moreover the inventive system is capable of locating objects which do not contain metal. The objects may be classified so that an object characteristic e. g. pedestrian or a car, can be resolved.

Further embodiments of the present invention when described with respect to the following figures, in which:
Fig. 1 shows a block diagram of a mobile receiver according to an embodiment of the present invention; and
Fig. 2 shows a block diagram of a mobile receiver according to an embodiment of the present invention.

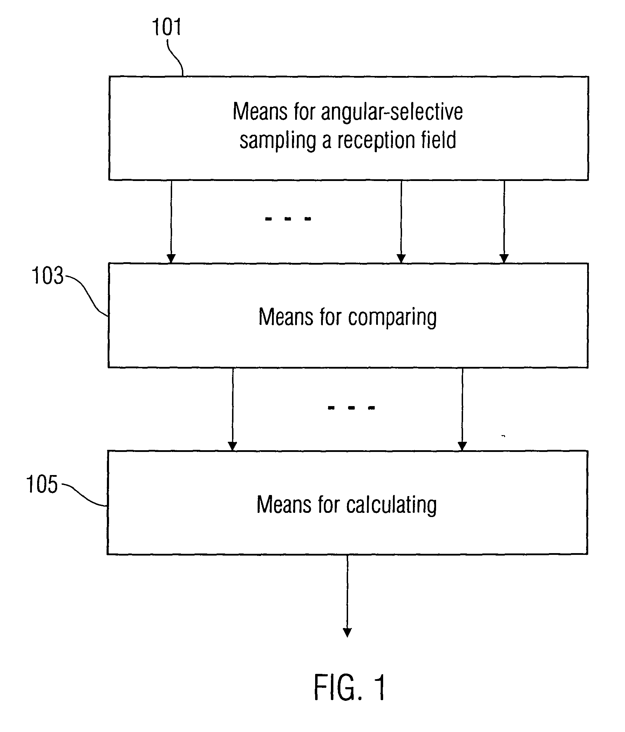

The mobile receiver shown in Fig. 1 comprises means 101 for angular-selective sampling a reception field. The means 101 for angular-selective sampling has a plurality of outputs coupled to means 103 for comparing having a plurality of outputs coupled to means 105 for calculating, the means 105 for calculating having an output.

According to the present invention, the means 101 for angular-selective sampling is configured for angular-selective sampling a reception field over time to obtain a plurality of peak time signals being provided via the plurality of outputs, a peak time signal of the plurality of peak time signals representing a variation of a peak angle over time, wherein a peak angle corresponding to a time instant is an angle at which the reception field has a local maximum at the time instant.

For example, the means 101 for angular-selective sampling may comprise a receive antenna array for angular-selective sampling the reception field, the reception field being a receivable version of a transmission field resulting when transmitting the transmitter-specific signal.

According to the present invention, the mobile receiver further may be configured for analysing a received version of the transmitter-specific signal for object classification.

According to the present invention, the means 101 for angular-selective sampling may further comprise a beam-former for steering an angular reception characteristic of the receive antenna array over time. For example the beam-former is configured for steering the reception characteristic of the receive antenna array such that at subsequent time instants different reception angles, differing by e.g. 10°, are chosen in order to sample the reception field at different directions of arrival.

In accordance with a further aspect of the present invention, the means 101 for angular-selective sampling may comprise a plurality of beam-formers, each beam-former being configured for steering an angular reception characteristic of the receive antennae array for sampling the reception field at a predetermined reception angle being associated with a specific direction of arrival. In this case the reception field can be sampled simultaneously for different directions of arrival. Furthermore, the means 101 for angular-selective sampling may comprise a detector for detecting a local maximum of the received reception field to obtain the plurality of peak time signals. For example, the detector may configured for thresholding the reception field in order to obtain the local maximum.

In accordance with the present invention, the means 103 for comparing is configured for comparing the plurality of peak time signals or processed versions thereof with a plurality of predetermined reference signals, wherein a predetermined reference signal represents a predetermined variation of peak angle over time corresponding to a direct line-of-sight path, to obtain a best match peak time signal.

As mentioned above, the direct path signals may be recognized on a basis of pattern recognition using the reference signals. In accordance with an aspect of the present invention, the plurality of peak time signals provided by the means 101 for angular-selective sampling may be subject to a pattern recognition scheme using the reference signals.

In accordance with a further aspect of the present invention, the means 103 for comparing may be configured for comparing a plurality of versions of the peak time signals to the reference signals, wherein a processed version of a peak time signal may result from an appropriate processing of the peak time signal, for example from extracting certain characteristics associated with e.g. different distance propagation scenarios, e. g. echoes or direct components, from the peak time signal.

For extracting the characteristic features, the means 103 for comparing may comprise a plurality of feature extractors for extracting characteristics from the plurality of peak time signals to obtain processed versions thereof. In other words, the means 103 for comparing may comprise, for a peak time signal, a feature extractor for extracting characteristics or characteristic properties of the peak time signal to obtain a processed version of the peak time signal, the processed version being a feature vector.

For example, each feature extractor may comprise a filter bank for filtering the peak time signal to extract a characteristic features, wherein a filter in the filter bank is configured for extracting a characteristic feature. For example, each feature extractor may comprise a Gabor filter bank for filtering, each filter being associated with a different centre frequency and/or bandwidth.

The processed versions of the plurality of peak time signals may be subject to a pattern recognition scheme in order to determine whether the processed versions correspond to direct components or to echo components.

For example, the means 103 for comparing may comprise, for a processed version, a feature classifier for classifying the processed versions as a direct path component or as an echo component in order the obtain the best match peak time signal.

For example, the means 103 for comparing may be configured for comparing the processed versions with reference signals in order to perform the pattern recognition scheme for classifying.

In accordance with a further aspect of the present invention, a feature classifier comprised by the means 103 for comparing may comprise a phase-only matched filter for classifying the processed versions on a basis of filtering.

The processed versions are filtered using the phase-only matched filter to obtain filtered processed versions comprising e.g. complex conjugated versions of the processed versions, and the filtered processed versions are compared with the plurality of reference signals to obtain the best match peak time signal representing the direct path variation.

For example, if a processed version corresponds to a direct path component, then a single peak may be obtained after filtering. Conversely, if a processed version represents an echo component, then instead of a single peak signal e. g. a constant signal may be obtained.

The means 105 for calculating is configured for calculating the position using the best match peak time signal by the means of e. g. triangulation. Since the elements of the best match peak time signal are associated with direction of arrivals associated with different angles, the location of the transmitter can be continuously calculated using e.g. subsequent elements of the best match peak time signal to determine a crossing point between the corresponding line-of-sight directions.

In accordance with the present invention, for direction of arrival estimation (DOA), a linear antenna array may be used. Antenna arrays ("smart antennas") exhibit a large gain compared to single antennas. The array can transmit vast power in one direction while transmitting almost no power into other directions. In the same way, the antenna array can receive a lot power from one direction while receiving no power in another direction, since its directional radio pattern is the same as its directional receiving pattern. The directional receiving pattern can be steered electronically by amplifying the amplitude an shifting the phase of the received signal of each antenna array element individually. The sum of all amplified and shifted signals is maximum in a certain direction and minimum in another direction. This procedure is called beam-forming. The DOA estimator performs a beam sweep. This means, the system first maximizes its sensitivity e. g. at an angle of 0 degrees and measures the incident power, then maximizes at 5 degrees and measures the power and so forth. The angular determination is carried out by a synchronous beam-sweep, i.e. a multi-channel approach: several channels exist in parallel, each maximizing the sensitivity in another angle of arrival. The angle of arrival is determined from the power distribution of the incident signal into the various channels. The separation of the received power into the various channels (and thus into the according angles of arrival) takes place by means of digital beam-forming.

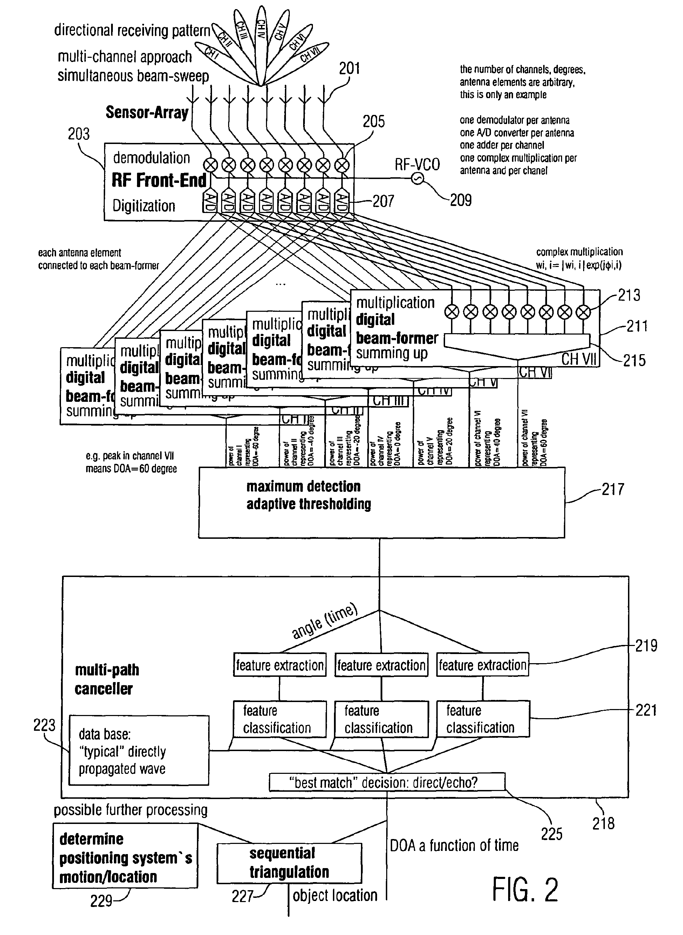

In the digital beam-forming procedure, the received element signals first are down-converted (if the carrier frequency is high) and then digitized by an A/D converter. Then the digital samples (representing the element signals) are multiplied with a complex factor and finally summed up to form the composite array signal and to achieve the desired directional receiving pattern. This way is much simpler and much more robust than shifting the phase of the element signal at radio frequency (e. g. at 868 MHz or 2.45 GHz).The down-conversion is an IQ-demodulation in order to easy the receiver phase-shift procedure. After sampling and A/D-conversion on an intermediate frequency, a digital IQ-down-conversion into the base band is performed prior to the multi-channel parallel digital beam-forming. This digital down-conversion is omitted in the sketch view for simplicity. Also omitted in the sketch view of Fig. 2 for simplicity are some of the wires, that connect all antennas to all channels.

Mobile telecommunication systems employ a kind of beam-forming ("smart antennas"). These systems maximize the sensitivity in a certain direction and minimize the sensitivity in another certain direction, where the presence of a n interferer is assumed. The tasks of these systems is not object location, but spatial division multiplexing of various telecommunication channels. For the object location, the sensitivity of the receiver in a certain direction has to be maximized in a certain direction and minimized in all other directions.

As commonly used beam-forming methods applied to mobile telecommunication fail in a case of object location since these methods try to minimize the sensitivity in a certain angle of an interferer, while for the object location purposes the sensitivity has to be maximized in only one direction and to be minimized in all other directions, new beam-forming algorithms have been performed.

In case of an object detection and location in urban areas when there is no line of sight the transponder transmission frequency is chosen carefully (ISM band is mandatory) so that the signal is not too vastly attenuated by e.g. parking cars, nor shall the size of the array be too large, because it has to fit on the car, and the distance between two antennas has to be half the wavelength. At a transmission frequency of 868 MHz, twelve antennas spaced at half wavelength fit on the front of a typical vehicle. The number of antenna elements is restricted to the size of a vehicle front. For other purposes, the directional estimator can be utilized using a larger number of elements, thus enhancing the angular resolution. In case of directional determination with line of sight is the issue, a higher transmission frequency can be used so that the size of the antenna array may be decreased or the number of elements may be increased which results in a higher angular resolution.

In Fig. 2, an embodiment of a mobile receiver incorporating the above-discussed features is shown.

The mobile receiver comprises a receive antenna array 201 being coupled to radio frequency (RF) front end 203, the radio frequency front end 203 comprising, for each receive antenna in the receive antenna array, a demodulator 205, and for each demodulator 203 an analog to digital-converter (A/D) 207. The down converters 205 are controlled by a reference oscillator 209 in (RF-VCO, radio frequency-voltage controlled oscillator). The mobile receiver shown in Fig. 2 further comprises a plurality of beam-formers 211, the plurality of beam-formers 211 corresponding to the plurality of analog to digital-converters 207, wherein each analog to digital-converter 207 is coupled to each beam-former 211.

Each beam-former 211 comprises a plurality of multipliers 213, each multiplier 213 being configured for multiplying a signal provided by a corresponding analog to digital converter 207 by a complex multiplication factor. Furthermore, each beam-former 211 comprises a summation element 215 (an adder) being configured for summing up the output signals provided by the multipliers 213, wherein the output signals of the summation elements 215 correspond to the output signals of the digital beam-formers 211. The output signal provided by the beam-formers 211 may be associated with a power of an associated channel representing a specific direction of arrival, for example a channel representing a direction of arrival corresponding to 60°.

The outputs of the beam-formers 211 are coupled to a detector 217, the detector 217 being configured for performing a maximum detection scheme or adaptive thresholding, since multiple peaks may occur due to echoes.

If the output is below this threshold then no signal is regarded as being received from the directions.

For example there may appear e. g. two peaks in channel II and channel VII, if due to echoes signals from 60° and from -40° are received, by the way of example only

In accordance with the present invention, the treshold may be an energy or a power value, e.g. -60dBm.

The detector 217 is configured for outputting a vector of peak angles as a function of time, the vector dimension depending on measured signals, wherein the vector of peak angles may represent a peak time signal. The vector is than split into elements i.e. peak angles as a function of time.

An output of the detector 217 (or a plurality of outputs) is coupled to a multi path canceller 218. The multi path canceller 218 comprises a plurality of feature extractors 219, each feature extractor 219 being coupled to a feature classifier 221.

The multi path canceller 218 (corresponding e.g. to the means for comparing the plurality of peak time signals mentioned above) comprises a data base 223 for providing typical directly propagated wave patterns, i.e. the plurality of reference signals. The feature extractors are than coupled to a decision block 225 being configured for determining a best match decision in order determine either a component as a direct component or a echo component.

The best match decision block 225 comprises an output for providing the best match peak time signal, i.e. a direction of arrival as a function of time.

The mobile receiver further comprises means 227 for calculating the position, the means 227 for calculating being configured for performing e.g. sequential triangulation for obtaining the object location.

In order to perform the sequential triangulation, the mobile receiver of Fig. 2 may further comprise a block 229 for determining positioning system's motion/location.

Fig. 2 demonstrates the case where a number of channels, degrees, antenna elements is arbitrary, by the way of example only. As is shown in Fig. 2 one demodulator per antenna, one A/D converter per antenna, one adder per channel and one complex multiplication per antenna and per channel are required. Moreover, the multiplier 213 being comprised by the beam-formers 211 are configured for performing a complex multiplication according to a beam-forming scheme.

In accordance with the present invention, the reference signals may be obtained during a training period during which typical propagation characteristics being associated with transmitting or receiving the transmitter-specific signals can be gathered.

The present invention further provides a mobile receiver for estimating a position of a transmitter, the transmitter being configured for transmitting a transmitter specific signal, wherein the mobile receiver comprises a receive antenna array having a reception characteristic, a beam-former or a plurality of beam-formers for steering the reception characteristic of the receive antenna array, when the mobile receiver is located at a first position to obtain first received versions of the transmitter-specific signal for different angles of reception, i.e. for different directions of arrival, and for steering the reception characteristic of the receive antenna array when the mobile receiver is located at a second position to obtain second received versions of the transmitter-specific signal for different angels of reception.

The mobile receiver may further comprise a processor for processing the first received versions to obtain an estimate for a first direction of a first direct path extending between the transmitter and the mobile receiver being located at the first position, and for processing the second received versions to obtain an estimate for a second direction of a direct path extending between the transmitter and the mobile receiver being located at the second position. The mobile receiver may further comprise means for combining the estimate of the first direction of the first direct path and the estimate of the second direction of the second direct path to obtain an estimate for the position of the transmitter. The mobile receiver may comprise the functionalities of the mobile receiver described above.

For example, referring again to Fig. 2 , the receive antenna array may comprise the antennas and the RF Front end shown therein. The beam-former or the beam-formers may correspond to the beam-formers 211 shown in Fig. 2. The processor may comprise the detector 217 and the subsequent elements, i.e. the multi path canceller 218, the means for calculating 227 and the block 229.

For estimation purposes, a linear antenna-array is used and digital beam-forming is employed. The angular determination is carried out by a simultaneous beam-sweep, i.e. a multi-channel approach: several channels exist in parallel, each maximizing the sensitivity in another angle of arrival. As in urban traffic scenes there are a lot of reflectors, the estimation takes place in a multi path propagation environment. So the receiver distinguishes between direct propagation and reflected waves descending from the VRU transponder. As commonly used beam-forming methods applied to mobile telecommunication in our application fail to the fact, that these try to minimize the sensitivity in a certain angle of an interferer, while for VRU location the sensitivity has to be maximized in only one direction and to be minimized in all other directions, new beam-forming algorithms are performed. As the vehicle moves on, the angle of arrival of the incident signals move according to a certain pattern. The time sequence of angles of arrival is used to identify the direct wave and to determine VRU location. The receiver contains a data storage and a signal processor to analyze the angle of arrival of the incident signals. The transponder transmission frequency is chosen carefully (ISM band is mandatory) so that the signal is not too vastly attenuated by e.g. parking cars, nor shall the size of the array be too large, because it has to fit on the car, and the distance between two antennas has to be half the wavelength. At a transmission frequency of 868 MHz, twelve antennas spaced at a half wavelength fit on the front of a typical vehicle. The VRU transponder signal contains a certain signature for its identification and its discrimination and its against other VRUs and other signal sources in the environment.

Depending on certain implementation requirements, the inventive methods can be implemented in hardware or in software. The implementation can be performed using a digital storage medium, in particular a disk or a CD having electronically readable control signals, which can cooperate with a programmable computer system such that the inventive methods are performed. Generally, the present invention is, therefore, a computer-program product with a program code stored on a machine-readable carrier, the program code being formed for performing the inventive methods when the computer program product runs on a computer. In other words, the inventive methods are, therefore, a computer program having a program code for performing the inventive methods when the computer program runs on a computer.

## Claims

1. Mobile receiver for estimating a position of a transmitter, the transmitter being configured for transmitting a transmitter specific signal, the mobile receiver comprising:
means (101) for angular-selective sampling a reception field over time to obtain a plurality of peak time signals, a peak time signal representing a variation of a peak angle over time, wherein a peak angle corresponding to a time instant is an angle at which the reception field has a local maximum at the time instant;
means (103) for comparing the plurality of peak time signals or a processed versions thereof with a plurality of predetermined reference signals, a predetermined reference signal representing a predetermined variation of a peak angle over time corresponding to a direct line-of-sight path to obtain a best match peak time signal; and
means (105) for calculating the position using the best match peak time signal.

2. Mobile receiver according to claim 1, wherein the means (101) for angular-selective sampling comprises a receive antenna array for angular-selectively receiving a reception field.

3. Mobile receiver according to claim 2, the means (101) for angular-selective sampling further comprising a beam-former for steering an angular reception characteristic of the receive antenna array over time.

4. Mobile receiver according to claim 2 or 3, the means (101) for angular-selective sampling comprising a plurality of beam-formers for simultaneously sampling the reception field for different angles of reception, each beam-former being configured for steering an angular reception characteristic of the receive antenna array for receiving the reception field at a predetermined reception angle.

5. Mobile receiver according to claims 1 to 4, the means (101) for angular-selective sampling comprising a detector for detecting a local maximum of the reception field to obtain the plurality of peak time signals.

6. Mobile receiver according to claim 5, wherein the detector is configured for thresholding.

7. Mobile receiver according to claims 1 to 6, wherein the means (103) for comparing comprises, for a peak time signal, a feature extractor for extracting characteristic features of the peak time signal over time to obtain a processed version of the peak time signal.

8. Mobile receiver according to claim 7, wherein the feature extractor comprises a filter bank for filtering the peak time signal to extract the characteristic features.

9. Mobile receiver according to claim 8, wherein the filter is a Gabor filter bank comprising filters of different centre frequency or bandwidth.

10. Mobile receiver according to claims 7 to 9, wherein the means (103) for comparing comprises, for a processed version, a feature classifier for classifying the processed version as a direct path component or as an echo component to obtain the best match peak time signal.

11. Mobile receiver according to claim 10, wherein the feature classifier comprises a phase-only matched filter for classifying the processed version for providing the best match peak time signal.

12. Mobile receiver according to claims 1 to 11, the means (105) for calculating being configured for calculating the position on a basis of a triangulation scheme.

13. Mobile reception method comprising:
angular-selective sampling a reception field over time to obtain a plurality of peak time signals, a peak time signal representing a variation of a peak angle over time, wherein a peak angle corresponding to a time instant is an angle at which the reception field has a local maximum at the time instant;
comparing the plurality of peak time signals or processed versions thereof with a plurality of predetermined reference signals, a predetermined reference signal representing a predetermined variation of a peak angle over time corresponding to a direct line-of-sight path to obtain a best match peak time signal; and
calculating the position using the best matched peak signal.

14. Computer program for performing the method of claim 13, when the computer program runs on a computer.
